# EUROPÄISCHE PATENTSCHRIFT

(11) **EP 3 927 663 B1**
(45) Veröffentlichungstag und Bekanntmachung des Hinweises auf die Patenterteilung: **20.08.2025**
(21) Anmeldenummer: 20706672.1
(22) Anmeldetag: 18.02.2020
(51) Int. Cl.: C02F 1/40, B01D 17/02

(54) **FETTABSCHEIDERSYSTEM, BEHÄLTER UND VERFAHREN**
FAT SEPARATOR SYSTEM, CONTAINER AND METHOD
SYSTÈME SÉPARATEUR DE GRAISSE, RÉCIPIENT ET PROCÉDÉ

(30) Priorität: 19.02.2019 DE 102019104129
(43) Veröffentlichungstag der Anmeldung: 29.12.2021
(73) Patentinhaber: ACO Ahlmann SE & Co. KG, 24782 Büdelsdorf (DE)
(72) Erfinder:
(74) Vertreter: Meissner Bolte Partnerschaft mbB
(86) Internationale Anmeldenummer: PCT/EP2020/054238
(87) Internationale Veröffentlichungsnummer: WO 2020/169603

(56) Entgegenhaltungen:
- US-A- 5 705 055
- US-A1- 2004 195 186
- US-A1- 2011 297 626
- US-A1- 2014 150 877
- US-B1- 6 413 435

## Beschreibung

Die Erfindung betrifft ein Fettabscheidersystem, einen Entsorgungsbehälter und ein Verfahren zum Entfernen einer Fettschicht bei einem Fettabscheider eines solchen Fettabscheidersystems.

Bevor Abwasser in die Kanalisation geleitet werden kann, ist es notwendig, Fette von dem Abwasser zu trennen. Zu diesem Zweck werden Fettabscheider verwendet. Fettabscheider kommen in Betrieben mit gewerblicher Essensausgabe wie beispielsweise Gaststätten, Hotels, Großküchen und Imbissstuben, in denen fetthaltiges Abwasser anfällt, zum Einsatz.

Ein Fettabscheider ist aus DE 10 2010 060 748 A1 bekannt.

Dieser Fettabscheider funktioniert nach dem Schwerkraftprinzip bzw. dem Prinzip der Phasentrennung, wonach Stoffe, beispielsweise Fette, die eine geringere Dichte aufweisen als Wasser, sich auf der Wasseroberfläche sammeln und Stoffe, beispielsweise Feststoffe, die schwerer als Wasser sind, zu Boden sinken. Das Wasser kann so zwischen den getrennten Phasen entnommen werden.

Fettabscheider, die nach dem Schwerkraftprinzip funktionieren, müssen von Zeit zu Zeit gereinigt werden. Dazu ist es notwendig, das auf der Oberfläche schwimmende Fett zu entfernen. Bei dem oben genannten Fettabscheider muss dafür eine Abdeckung entfernt bzw. geöffnet werden, damit das Fett von Hand abgeschöpft oder abgepumpt werden kann. Bei Entfernen der Abdeckung entweichen starke Gerüche, die diesen Vorgang für die ausführende Arbeitskraft sehr unangenehm gestalten.

Ferner ist es denkbar, dass durch den Abschöpf- bzw. dem Abpumpvorgang bei geöffneter Abdeckung Fett verschüttet wird, was eine Belastung der Umwelt zur Folge hat.

Aus US 2011/297626 A1 ist ein Fettabscheidersystem bekannt, das einen Fettabscheider und einen Behälter zur Entsorgung von abgeschiedenem Fett aufweist. Das abgeschiedene Fett kann schwerkraftbedingt über eine Öffnung aus dem Fettabscheider in den Behälter abfließen. Ein mobiler Einsatz dieses Fettabscheidersystems ist damit eingeschränkt, da ein Ablauf des Fettes nur bei horizontaler Ausrichtung gewährleistet ist. Eine Geruchsbelästigung ist darüber hinaus auch nicht vermeidbar.

US 2014/150877 A1 beschreibt ein Fettabscheidersystem mit einem Behälter zur Entsorgung von abgeschiedenem Fett, der über ein Ventil an einem Fettabscheider angeschlossen ist. Das Abführen des abgeschiedenen Fettes erfolgt über das Schwerkraftprinzip, sodass ein mobiler Einsatz dieses Fettabscheidersystems ebenfalls eingeschränkt ist.

Der vorliegenden Erfindung liegt daher die Aufgabe zu Grunde, ein mobiles Fettabscheidersystem anzugeben, bei dem die hygienische Reinigung des Fettabscheiders verbessert ist. Ferner ist es Aufgabe der Erfindung, einen Entsorgungsbehälter und ein Verfahren anzugeben.

Erfindungsgemäß wird diese Aufgabe mit Blick auf
- das Fettabscheidersystem durch den Gegenstand des Anspruchs 1,
- den Entsorgungsbehälter durch den Gegenstand des Anspruchs 14 und
- das Verfahren durch den Gegenstand des Anspruchs 15
gelöst.

Konkret wird die Aufgabe durch ein mobiles Fettabscheidersystem, das einen Fettabscheider mit einem Zulauf zum Zuführen eines Fluids, einem Ablauf zum Abführen eines Fluids und einem Abscheidebereich umfasst, gelöst. Der Fettabscheider umfasst einen Reinigungszugang, durch den wenigstens ein Entsorgungsbehälter mit dem Abscheidebereich des Fettabscheiders lösbar fluidverbunden ist, wobei der Entsorgungsbehälter eine von Hand bedienbare Pumpe umfasst und durch die Pumpe der Inhalt des Abscheidebereichs in den Entsorgungsbehälter überführbar ist.

Die Erfindung hat folgende Vorteile.

Dem Fettabscheider ist durch den Zulauf Abwasser zuführbar. In dem Abscheideraum werden durch das Schwerkraftprinzip Fett, Feststoffe und Wasser voneinander getrennt. Das gereinigte Wasser tritt durch den Ablauf aus dem Fettabscheider aus. Der Entsorgungsbehälter ist mit dem Abscheideraum des Fettabscheiders lösbar durch den Reinigungszugang fluidverbunden. Der Entsorgungsbehälter umfasst eine von Hand bedienbare Pumpe. Die von Hand bedienbare Pumpe hat den Vorteil, dass das abgeschiedene Fett ohne Geruchsbelästigung sauber in den Entsorgungsbehälter überführbar, insbesondere pumpbar ist.

Der Vorteil des Entsorgungsbehälters liegt darin, dass nach dem Abpumpen der Fettschicht bzw. nach Erreichen eines bestimmten Füllstands des Entsorgungsbehälters der Entsorgungsbehälter und der Fettabscheider voneinander getrennt werden und der Inhalt des Entsorgungsbehälters entleert bzw. entsorgt wird. Es ist auch denkbar, dass der volle Entsorgungsbehälter durch einen leeren Entsorgungsbehälter ersetzt wird. Es ist möglich, dass mehrere Entsorgungsbehälter nacheinander befüllt und erst zu einem späteren Zeitpunkt der Entsorgung zugeführt werden. Es ist ferner denkbar, dass ein Entsorgungsbehälter vor der Entleerung mehrmals befüllbar ist.

Das erfindungsgemäße Fettabscheidersystem ist als mobiles Fettabscheidersystem ausgebildet. Das bedeutet insbesondere, dass der Fettabscheider und der Entsorgungsbehälter derart ausgebildet sind, dass der Fettabscheider und/oder der Entsorgungsbehälter transportierbar, insbesondere von Hand transportierbar, sind.

Bevorzugte Ausführungsformen der Erfindung sind in den Unteransprüchen angegeben.

In einer besonders bevorzugten Ausführungsform sind die Pumpe und der Entsorgungsbehälter integral ausgebildet. Hierbei ist vorteilhaft, dass keine separate Pumpe notwendig ist, die für die Entleerung zusätzlich angebracht werden muss. Um die Fettschicht abzupumpen, muss lediglich der Entsorgungsbehälter mit der integrierten Pumpe mit dem Fettabscheider verbunden sein.

In einer weiteren besonders bevorzugten Ausführungsform ist die Pumpe an einer Außenseite des Entsorgungsbehälters angeordnet. Dadurch ist die Pumpe leicht bedienbar. Des Weiteren ist die Pumpe an der Außenseite für Wartungen oder Reparaturen leicht zugänglich.

In einer weiteren bevorzugten Ausführungsform ist die Pumpe und der Reinigungszugang durch eine erste Fluidleitung miteinander fluidverbunden, wobei sich die erste Fluidleitung außerhalb des Entsorgungsbehälters und des Fettabscheiders erstreckt. Die erste Fluidleitung ist vorzugsweise als ein biegsamer Schlauch ausgebildet. Hierbei ist vorteilhaft, dass die Verbindung zwischen Entsorgungsbehälter und Fettabscheider einfach und schnell herstellbar ist. Die erste Fluidleitung ist so bei einem Defekt schnell und einfach austauschbar. Zusätzlich ist so die Länge der ersten Fluidleitung variabel. Vorzugsweise weist die erste Fluidleitung Verstärkungen auf. Es sind andere Ausbildungen der ersten Fluidleitung 18 denkbar.

In einer weiteren besonders bevorzugten Ausführungsform sind die erste Fluidleitung und der Reinigungszugang durch Klemmhebel lösbar miteinander verbunden. Dies ist vorteilhaft, da so auf einfache Weise eine fluiddichte und geruchsdichte Verbindung zwischen dem Entsorgungsbehälter und dem Fettabscheider herstellbar ist. Die Klemmhebel ermöglichen ein einfaches Lösen und Wiederherstellen der Fluidverbindung zwischen dem Entsorgungsbehälter und dem Fettabscheider. Alternativ sind andere Verschließmechanismen, beispielsweise ein Bajonettverschluss oder eine Schlauchschelle denkbar.

In einer besonders bevorzugten Ausführungsform ist eine zweite Fluidleitung zum Absaugen des Fluids mit dem Reinigungszugang fluidverbunden, wobei die zweite Fluidleitung ein offenes Ende aufweist und sich wenigstens abschnittsweise im Abscheidebereich innerhalb des Fettabscheiders erstreckt. Die zweite Fluidleitung, insbesondere das offene Ende, ermöglicht einen definierten Absaugpunkt im Abscheidebereich. Vorteilhafterweise ist das offene Ende der zweiten Fluidleitung derart im Abscheideraum angeordnet, dass die Fettschicht wenigstens zum größten Teil absaugbar ist. Es ist denkbar, dass sich die zweite Fluidleitung wenigstens abschnittsweise vertikal und/oder schräg im Abscheidebereich erstreckt.

Weiter in einer besonders bevorzugten Ausführungsform erstreckt sich das offene Ende der zweiten Fluidleitung wenigstens abschnittsweise in einen Schlammschutz. Der Schlammschutz verhindert, dass durch das offene Ende Schlamm angesaugt wird und die zweite Fluidleitung oder die erste Fluidleitung verstopft. Der Schlammschutz ist vorzugsweise tassenförmig ausgebildet. Andere Formen sind denkbar. Alternativ ist das offene Ende der zweiten Fluidleitung von dem Boden weg gerichtet.

In einer weiteren besonders bevorzugten Ausführungsform ist das offene Ende der zweiten Fluidleitung im Betrieb zwischen dem Boden und dem Ablauf des Fettabscheiders angeordnet. Zwischen dem Boden und dem Ablauf des Fettabscheiders erfolgt die Schwerkraftabscheidung. Die Anordnung des offenen Endes in dem genannten Bereich ist vorteilhaft, da sich in diesem Bereich im Betrieb die abzusaugende Fettschicht ansammelt.

In einer weiteren bevorzugten Ausführungsform umfasst der Fettabscheider ein Zulaufelement und ein Ablaufelement, die im Abscheidebereich angeordnet sind, wobei das Zulaufelement einen Auslass für das Fluid und das Ablaufelement einen Einlass für das Fluid aufweist und das offene Ende der zweiten Fluidleitung zwischen dem Einlass des Ablaufelements und dem Ablauf des Fettabscheiders angeordnet ist.

Das Zulaufelement ist mit dem Zulauf fluidverbunden. Das zu reinigende Fluid, insbesondere das Abwasser, tritt durch den Zulauf in das Zulaufelement ein. Das Zulaufelement beruhigt das Fluid, bevor es aus dem Auslass in den Abscheidebereich eintritt. In dem beruhigten Fluid ist die Trennung der Fremdstoffe von dem Fluid durch das Schwerkraftprinzip erleichtert.

Das Ablaufelement ist mit dem Ablauf fluidverbunden. Der Abstand zwischen dem Einlass des Ablaufelements und dem Ablauf des Fettabscheiders entspricht im Wesentlichen der maximalen Höhe der abgeschiedenen Fettschicht, bei der aus dem Ablauf noch das gereinigte Fluid, insbesondere Wasser, austritt. Bei einer größeren Fettschicht gelangt Fett durch den Einlass des Ablaufelements in den Ablauf und so in die Kanalisation.

Um vorzubeugen, dass kein Fett in die Kanalisation gelangt, ist es vorteilhaft, die Fettschicht regelmäßig zu entfernen. Daher ist es vorteilhaft, das offene Ende der zweiten Fluidleitung im Bereich der Höhe des Einlasses des Ablaufelements anzuordnen. So ist es möglich, dass auch bei einer großen Menge an Fett wenigstens annähernd die gesamte Fettschicht entfernbar ist.

In einer bevorzugten Ausführungsform umfasst der Entsorgungsbehälter eine Zugangsöffnung, durch die das abgeschiedene Fluid in den Entsorgungsbehälter einleitbar ist, wobei die Zugangsöffnung in Wirkrichtung der Schwerkraft unter dem Reinigungszugang des Fettabscheiders, insbesondere in Bodennähe des Entsorgungsbehälters, angeordnet ist.

Diese Ausführungsform unterstützt das Einleiten der abgeschiedenen Fettschicht in den Entsorgungsbehälter. Die in Bodennähe angeordnete Zugangsöffnung ist für eine Überführung des abgeschiedenen Fluids in den Entsorgungsbehälter durch das Heberprinzip vorteilhaft.

Bei dem Heberprinzip ist ein höher gelegenes, mit Flüssigkeit gefülltes Gefäß durch eine Differenz des hydrostatischen Drucks mit einem Schlauch in ein nieder gelegenes Gefäß entleerbar.

In einer Ausführungsform ist die Pumpe als eine Kolbenpumpe, eine Rotationspumpe oder eine Membranpumpe ausgebildet. Ein geeigneter Pumpentyp ist somit vorteilhafterweise je nach Anforderung wählbar. Erfindungsgemäß ist eine von Hand bedienbare Pumpe vorgesehen. Alternativ ist eine elektrische Variante eines oben genannten Pumpentyps denkbar.

In einer weiteren Ausführungsform ist die Pumpe als eine Siphonpumpe ausgebildet. Eine Siphonpumpe nutzt das oben beschriebene Heberprinzip aus. Bei einer Siphonpumpe muss nur bis zu dem Punkt von Hand gepumpt werden, bis das Fluid von selbst in den Entsorgungsbehälter fließt.

Im Rahmen der Anmeldung wird des Weiteren ein Entsorgungsbehälter offenbart und beansprucht.

Ferner wird im Rahmen der Anmeldung ein Verfahren zum Entfernen einer Fettschicht aus einem Fettabscheider des zuvor beschriebenen Fettabscheidersystems offenbart und beansprucht.

Bei dem Verfahren wird zunächst überprüft, ob die Fettschicht im Fettabscheider entfernt werden muss. Dazu umfasst der Fettabscheider vorzugsweise ein Sichtfenster und/oder einen Schwimmer. Anschließend wird der Entsorgungsbehälter mit dem Fettabscheider lösbar verbunden. Durch Betätigen der vorzugsweise von Hand bedienbaren Pumpe wird das abgeschiedene Fett in den Entsorgungsbehälter überführt. Nach dem Überführen des abgeschiedenen Fetts wird die Verbindung zwischen dem Entsorgungsbehälter und dem Fettabscheider gelöst und der Inhalt des Entsorgungsbehälters entsorgt.

Die Erfindung wird im Folgenden anhand von Ausführungsbeispielen unter Bezugnahme auf die beigefügten Zeichnungen näher erläutert.

Darin zeigen:
- Fig. 1: eine perspektivische Ansicht eines erfindungsgemäßen Ausführungsbeispiels eines Fettabscheidersystems;
- Fig. 2: eine Frontansicht des Fettabscheidersystems gemäß Fig. 1;
- Fig. 3: einen Schnitt durch das Fettabscheidersystem gemäß Fig. 1; und
- Fig. 4: einen weiteren Schnitt durch das Fettabscheidersystem gemäß Fig. 1.

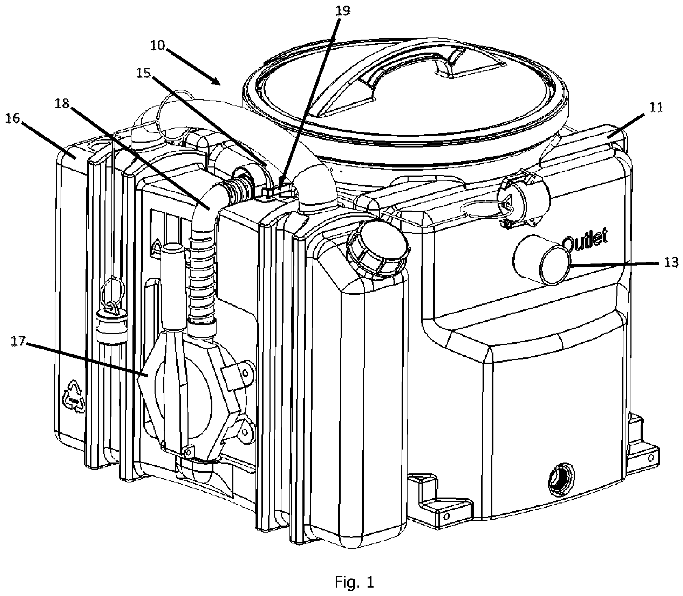

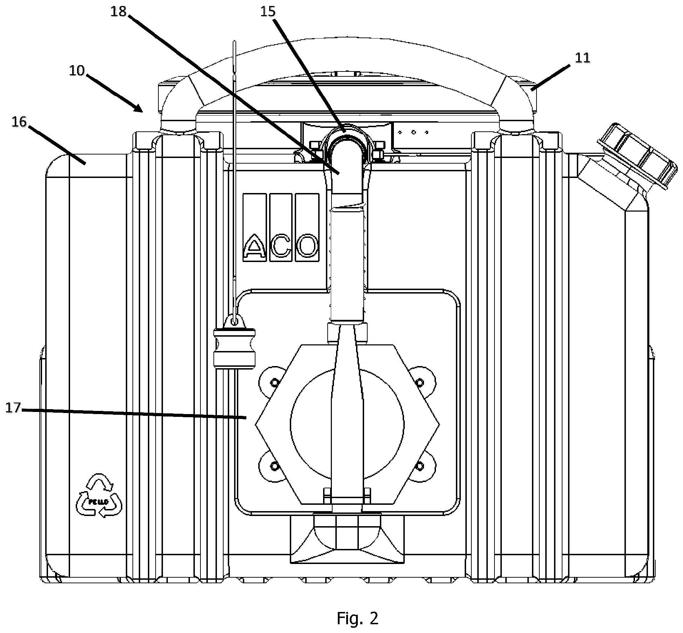

Die Figuren 1 und 2 zeigen ein erfindungsgemäßes Ausführungsbeispiel eines Fettabscheidersystems 10. Das Fettabscheidersystem 10 umfasst einen Fettabscheider 11 und einen Entsorgungsbehälter 16.

Der Fettabscheider 11 umfasst einen im Wesentlichen ovalen Bereich, einen im Wesentlichen rechteckigen Bereich und einen zylindrischen Bereich. Der zylindrische Bereich ist im Betrieb oben angeordnet, der ovale Bereich ist im Betrieb unten angeordnet und der rechteckige Bereich ist zwischen dem zylindrischen und dem ovalen Bereich angeordnet. Die Volumina, die die Bereiche umfassen, nehmen von dem ovalen Bereich ausgehend stufenweise ab. Es sind andere Formen und Varianten des Fettabscheiders denkbar.

Der zylindrische Bereich umfasst eine Abdeckung mit einem Schraubverschluss. Die Abdeckung ist für Wartungszwecke abnehmbar.

Auf der in Strömungsrichtung rechten Seite ist im zylindrischen Bereich des Fettabscheiders 11 ein Reinigungszugang 15 angeordnet. Der Fettabscheider 11 umfasst einen Stopfen zum geruchsdichten und fluiddichten Verschließen des Reinigungszugangs 15. Der Fettabscheider 11 weist im Bereich des Reinigungszugangs 15 Klemmhebel 19 auf.

Der Fettabscheider 10 umfasst im rechteckigen Bereich einen Ablauf 13 und einen Zulauf 12 (nicht dargestellt). Der Ablauf 13 ist an einer Außenseite des Fettabscheiders 11 angeordnet. Der Zulauf 12 ist auf einer dem Ablauf 13 gegenüberliegenden Seite des Fettabscheiders 11 angeordnet. Der Zulauf ist im Betrieb höher am Fettabscheider 11 angeordnet als der Ablauf 13. Eine andere Anordnung des Zulaufs 12 und des Ablauf 13 ist denkbar.

Durch den Zulauf 12 ist dem Fettabscheider 11 ein verunreinigtes Fluid zuführbar und durch den Ablauf 13 ein Fluid, insbesondere ein wenigstens teilweise gereinigtes Fluid, abführbar.

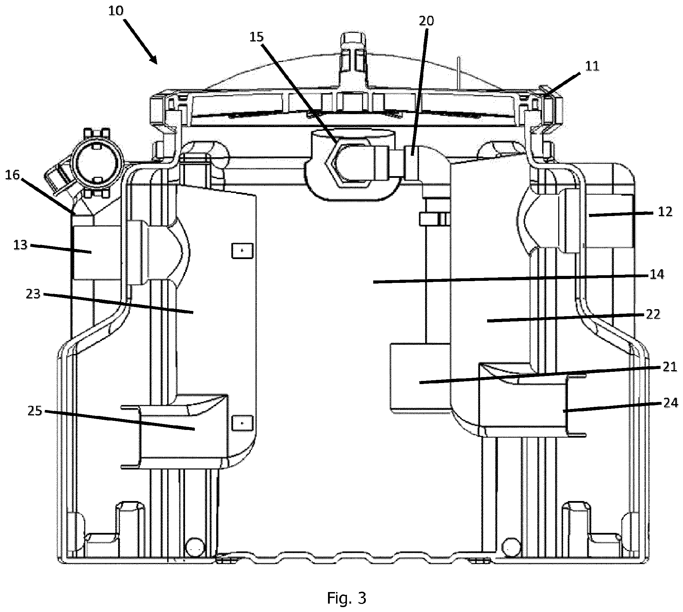

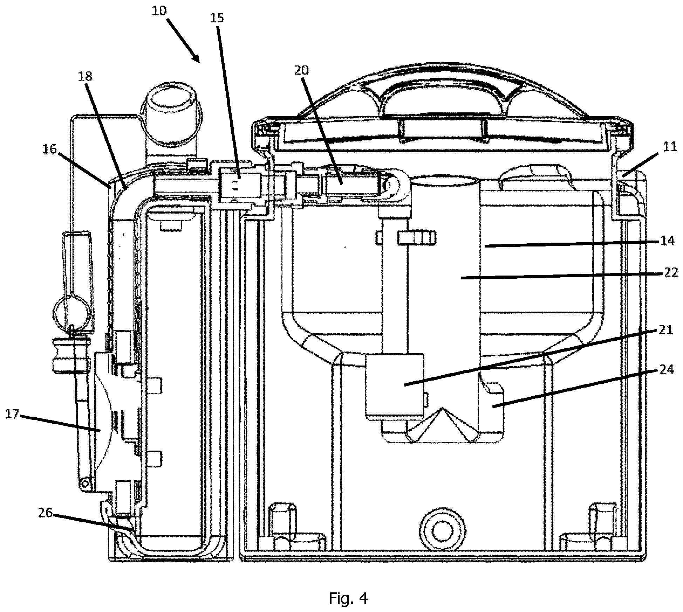

Der ovale Bereich umfasst einen Schlammfang (vgl. Figuren 3 und 4). Der ovale Bereich umfasst das größte Volumen. Das große Volumen ist für die Stabilität des Fettabscheiders vorteilhaft.

Auf der Seite des Reinigungszugangs 15 ist ein Entsorgungsbehälter 16 angeordnet. Der Entsorgungsbehälter 16 ist im Querschnitt im Wesentlichen rechteckig ausgebildet. Andere Formen sind denkbar. Der Entsorgungsbehälter 16 weist zwei Längsseiten, zwei Querseiten und zwei Stirnseiten auf. Die Seiten sind jeweils gegenüberliegend angeordnet. Die Stirnseiten sind im Betrieb orthogonal zur Wirkrichtung der Schwerkraft angeordnet. Zwischen den langen Kanten der Stirnseiten erstrecken sich die Längsseiten. Zwischen den kurzen Kanten der Stirnseiten erstrecken sich die Querseiten. Auf der im Betrieb oberen Stirnseite ist ein Tragegriff angeordnet. Die obere Stirnseite umfasst eine verschließbare Öffnung zum Entleeren des Entsorgungsbehälters 16.

Der Entsorgungsbehälter 16 umfasst eine erste Fluidleitung 18. Die erste Fluidleitung 18 erstreckt sich außerhalb des Entsorgungsbehälters 16. Der Entsorgungsbehälter 16 umfasst einen weiteren Stopfen zum geruchsdichten und fluiddichten Verschließen der ersten Fluidleitung 18. Die erste Fluidleitung 18 ist als ein biegsames Schlauchstück ausgebildet. Die erste Fluidleitung 18 umfasst abschnittsweise Verstärkungen.

An der dem Fettabscheider 11 abgewandten Längsseite des Entsorgungsbehälters 16 ist eine Pumpe 17 angeordnet. Die Pumpe 17 umfasst einen Hebel. Durch den Hebel ist die Pumpe 17 von Hand bedienbar. Alternativ sind andere Bedienelemente für die Pumpe 17 denkbar. Es sind verschiedene Pumpentypten, bspw. Kolbenpumpen, Rotationspumpen oder Membranpumpen, möglich. Alternativ ist eine elektrische Variante eines vorerwähnten Pumpentyps denkbar. Die erste Fluidleitung 18 bildet eine Fluidverbindung zwischen der Pumpe 17 und dem Reinigungszugang 15.

Der Entsorgungsbehälter 16 ist durch die erste Fluidleitung 18, dem Reinigungszugang 15 und den Klemmhebeln 19 mit dem Fettabscheider 11 lösbar fluidverbunden. Die biegsame erste Fluidleitung 18 erleichtert das Verbinden mit dem Reinigungszugang 15 und den Klemmhebeln 19. Es sind andere Verbindungselemente als Klemmhebel 19, beispielsweise ein Bajonettverschluss, denkbar.

Durch die Pumpe 17 ist das Fluid, insbesondere das abgeschiedene Fett, aus dem Fettabscheider 11 in den Entsorgungsbehälter 16 überführbar, insbesondere abpumpbar. Der Entsorgungsbehälter 16 umfasst eine Zugangsöffnung 26, die der Pumpe 17 nachgeordnet ist. Die Zugangsöffnung ist im Betrieb unten, insbesondere in Bodennähe angeordnet. Durch die Zugangsöffnung 26 strömt das abgetrennte Fluid in den Entsorgungsbehälter 16.

Die Klemmhebel 19 ermöglichen eine lösbare und wiederverschließbare Fluidverbindung zwischen dem Entsorgungsbehälter 16 und dem Fettabscheider 11. Soll der Entsorgungsbehälter 16 entleert oder ausgetauscht werden, wird die Verbindung zwischen der ersten Fluidleitung 18 und dem Reinigungszugang 15 durch das Öffnen der Klemmhebel 19 gelöst. Der von dem Fettabscheider 11 getrennte, volle Entsorgungsbehälter 16 wird entleert und wieder mit dem Fettabscheider 11 auf die oben beschriebene Weise verbunden. Alternativ ist der volle Entsorgungsbehälter 16 mit einem weiteren, leeren Entsorgungsbehälter 16 austauschbar.

Die Figuren 3 und 4 zeigen einen Schnitt durch das Fettabscheidersystem gemäß den Figuren 1 und 2. Fig. 3 zeigt einen Schnitt parallel zur Strömungsrichtung und Fig. 4 einen Schnitt orthogonal zur Strömungsrichtung durch den Fettabscheider 11.

Der Fettabscheider 11 umfasst einen Abscheidebereich 14. Der Abscheideberiech 14 ist im Innern des Fettabscheiders 11 angeordnet.

Der Abscheidebereich 14 umfasst ein Zulaufelement 22 und ein Ablaufelement 23, eine zweite Fluidleitung 20 und den Schlammfang.

Das Zulauf- und das Ablaufelement 22, 23 sind im Wesentlichen zylindrisch ausgebildet. Das Zulauf- und Ablaufelement 22, 23 erstrecken sich in Schwerkraftrichtung im Abscheidebereich 14. Das Zulaufelement 22 ist mit dem Zulauf 12 fluidverbunden. Das Ablaufelement 23 ist mit dem Ablauf 13 fluidverbunden. Das Zulaufelement 22 umfasst einen Auslass 24 und das Ablaufelement 23 einen Einlass 25. Der Auslass 24 und der Einlass 25 sind am im Betrieb unteren Ende des Zulauf- und des Ablaufelements 22, 33 angeordnet. Der Auslass 24 des Zulaufelements 22 ist im Betrieb höher angeordnet als der Einlass 25 des Auslasselements 23.

Das Zulaufelement 22 beruhigt das Fluid, das durch den Zulauf 12 einströmt. Das beruhigte Fluid tritt durch den Auslass 24 des Zulaufelements 22 in den Abscheidebereich 14 ein. Ein beruhigtes Fluid ist für den Abscheideprozess vorteilhaft, da in einem beruhigten Fluid die Feststoffe auf den Boden absinken und die Fette an die Oberfläche aufsteigen.

Die zweite Fluidleitung 20 ist mit dem Reinigungszugang 15 fluidverbunden. Die zweite Fluidleitung 20 erstreckt sich abschnittsweise orthogonal zur Fluidoberfläche. Die zweite Fluidleitung 20 ist in dem orthogonalen Bereich durch eine Klemmverbindung mit der Außenseite des Zulaufelements 12 verbunden.

Die zweite Fluidleitung 20 umfasst ein offenes Ende. Das offene Ende ist in Wirkrichtung der Schwerkraft, d.h. zum Boden hin, ausgerichtet. Das offene Ende erstreckt sich in einen Schlammschutz 21. Der Schlammschutz 21 ist tassenförmig ausgebildet. Andere Formen sind denkbar. Alternativ erstreckt sich das offene Ende entgegen der Schwerkraftrichtung.

Der Schlammschutz 21 verhindert, dass auf dem Boden abgelagerte Feststoffe beim Entfernen bzw. beim Abpumpen der Fettschicht in die zweite oder erste Fluidleitung 20, 18 gelangen.

Durch den Abscheidevorgang ist das Fluid im Abscheideraum 14 in verschiedene Phasen getrennt. Am Boden sammeln sich Stoffe, insbesondere Feststoffe, die eine größere Dichte als Wasser aufweisen (Schlamm), und auf der Wasseroberfläche Stoffe wie Fette und Öle, die eine geringere Dichte als Wasser aufweisen.

Der Einlass 25 des Ablaufelements 23 ist in dem Bereich angeordnet, in dem sich das gereinigte Wasser sammelt. Durch das Ablaufelement 23 fließt so nur das gereinigte Wasser ab. Damit kein Fett durch den Einlass 25 in das Ablaufelement 23 gelangt, ist es notwendig, die Fettschicht regelmäßig zu entfernen.

Die Position des offenen Endes definiert den Absaugpunkt der Fettschicht. Es ist vorteilhaft, wenn der Absaugpunkt im Betrieb auf einer Höhe knapp oberhalb der Höhe des Einlasses 25 des Ablaufelements 23 angeordnet ist. Dadurch ist die Fettschicht fast vollständig entfernbar.

Das beanspruchte Fettabscheidersystem ist nicht auf das in den Figuren 1 bis 4 offenbarte Ausführungsbeispiel begrenzt.

### Bezugszeichenliste

- 10: Fettabscheidersystem
- 11: Fettabscheider
- 12: Zulauf
- 13: Ablauf
- 14: Abscheidebereich
- 15: Reinigungszugang
- 16: Entsorgungsbehälter
- 17: Pumpe
- 18: erste Fluidleitung
- 19: Klemmhebel
- 20: zweite Fluidleitung
- 21: Schlammschutz
- 22: Zulaufelement
- 23: Ablaufelement
- 24: Auslass
- 25: Einlass
- 26: Zugangsöffnung

## Patentansprüche

1. Mobiles Fettabscheidersystem umfassend einen Fettabscheider (11) mit einem Zulauf (12) zum Zuführen eines Fluids, einem Ablauf (13) zum Abführen eines Fluids und einem Abscheidebereich (14), wobei der Fettabscheider (11) einen Reinigungszugang (15) umfasst, durch den wenigstens ein Entsorgungsbehälter (16) mit dem Abscheidebereich (14) des Fettabscheiders (11) lösbar fluidverbunden ist,
**dadurch gekennzeichnet, dass**
der Entsorgungsbehälter (16) eine von Hand bedienbare Pumpe (17) umfasst und durch die Pumpe (17) der Inhalt des Abscheidebereichs (14) in den Entsorgungsbehälter (16) überführbar ist.

2. Fettabscheidersystem nach Anspruch 1,
**dadurch gekennzeichnet, dass**
die Pumpe (17) und der Entsorgungsbehälter (16) integral ausgebildet sind.

3. Fettabscheidersystem nach Anspruch 1 oder 2,
**dadurch gekennzeichnet, dass**
die Pumpe (17) an einer Außenseite des Entsorgungsbehälters (16) angeordnet ist.

4. Fettabscheidersystem nach Anspruch 3,
**dadurch gekennzeichnet, dass**
die Pumpe (17) und der Reinigungszugang (15) durch eine erste Fluidleitung (18) miteinander fluidverbunden sind, wobei sich die erste Fluidleitung (18) außerhalb des Entsorgungsbehälters (16) und des Fettabscheiders (11) erstreckt.

5. Fettabscheidersystem nach Anspruch 4,
**dadurch gekennzeichnet, dass**
die erste Fluidleitung (18) und der Reinigungszugang (15) lösbar miteinander verbunden sind.

6. Fettabscheidersystem nach Anspruch 5,
**dadurch gekennzeichnet, dass**
die erste Fluidleitung (18) und der Reinigungszugang (15) durch Klemmhebel (19) lösbar miteinander verbunden sind.

7. Fettabscheidersystem nach einem der vorhergehenden Ansprüche, **dadurch gekennzeichnet, dass**
eine zweite Fluidleitung (20) zum Absaugen des Fluids mit dem Reinigungszugang (15) fluidverbunden ist, wobei die zweite Fluidleitung (20) ein offenes Ende aufweist und sich wenigstens abschnittsweise im Abscheidebereich (14) innerhalb des Fettabscheiders (11) erstreckt.

8. Fettabscheidersystem nach Anspruch 7,
**dadurch gekennzeichnet, dass**
das offene Ende der zweiten Fluidleitung (20) sich wenigstens abschnittsweise in einen Schlammschutz (21) erstreckt.

9. Fettabscheidersystem nach Anspruch 7 oder 8,
**dadurch gekennzeichnet, dass**
das offene Ende der zweiten Fluidleitung (20) im Betrieb zwischen dem Boden und dem Ablauf (13) des Fettabscheiders (11) angeordnet ist.

10. Fettabscheidersystem nach einem der Ansprüche 7 bis 9,
**dadurch gekennzeichnet, dass**
der Fettabscheider (11) ein Zulaufelement (22) und ein Ablaufelement (23) umfasst, die im Abscheidebereich (14) angeordnet sind, wobei das Zulaufelement (22) mit dem Zulauf (12) und das Ablaufelement (23) mit dem Ablauf (13) fluidverbunden ist, und das Zulaufelement (22) einen Auslass (24) für das Fluid und das Ablaufelement (23) einen Einlass (25) für das Fluid aufweist und das offene Ende der zweiten Fluidleitung (20) zwischen dem Einlass (25) des Ablaufelements (23) und dem Ablauf (13) des Fettabscheiders (11) angeordnet ist.

11. Fettabscheidersystem nach einem der vorhergehenden Ansprüche,
**dadurch gekennzeichnet, dass**
der Entsorgungsbehälter (16) eine Zugangsöffnung (26) umfasst, durch die das abgeschiedene Fluid in den Entsorgungsbehälter (16) einleitbar ist, wobei die Zugangsöffnung (26) in Wirkrichtung der Schwerkraft unter dem Reinigungszugang (15) des Fettabscheiders, insbesondere in Bodennähe des Entsorgungsbehälters (16), angeordnet ist.

12. Fettabscheidersystem nach einem der vorhergehenden Ansprüche,
**dadurch gekennzeichnet, dass**
die Pumpe (17) als eine Kolbenpumpe, eine Rotationspumpe oder eine Membranpumpe ausgebildet ist.

13. Fettabscheidersystem nach
einem der vorhergehenden Ansprüche,
**dadurch gekennzeichnet, dass**
die Pumpe (17) als eine Siphonpumpe ausgebildet ist.

14. Entsorgungsbehälter für ein mobiles Fettabscheidersystem nach einem der vorhergehenden Ansprüche, umfassend eine von Hand bedienbare Pumpe (17), wobei der Entsorgungsbehälter (16) mit dem Abscheidebereich (14) des Fettabscheiders (11) zur wenigstens teilweise Entleerung lösbar oder fest fluidleitend verbindbar und durch die Pumpe (17) der Inhalt des Abscheidebereichs (14) in den Entsorgungsbehälter (16) überführbar ist.

15. Verfahren zum Entfernen einer Fettschicht bei einem Fettabscheider eines Fettabscheidersystems nach einem der Ansprüche 1 bis 13, bei dem
a. der Fettanteil im Abscheidebereich (14) überprüft wird,
b. der Entsorgungsbehälter (16) mit dem Reinigungszugang (15) verbunden wird,
c. anschließend der abgeschiedene Stoff durch Betätigen der Pumpe (17) abgesaugt und in den Entsorgungsbehälter (16) überführt wird, und
d. der Entsorgungsbehälter (16) wieder von dem Fettabscheider getrennt und der abgeschiedene Stoff entsorgt wird.

## Claims

1. Mobile grease separator system, comprising a grease separator (11) having an inlet (12) for supplying a fluid, an outlet (13) for discharging a fluid, and a separation area (14), wherein the grease separator (11) comprises a cleaning access (15), through which at least one disposal container (16) is releasably fluidly connected to the separation area (14) of the grease separator (11), **characterized in that**
the disposal container (16) comprises a manually operable pump (17) and the contents of the separation area (14) can be transferred into the disposal container (16) by means of the pump (17).

2. Grease separator system according to claim 1,
**characterized in that**
the pump (17) and the disposal container (16) are integrally formed.

3. Grease separator system according to claim 1 or 2,
**characterized in that**
the pump (17) is arranged on an outer side of the disposal container (16).

4. Grease separator system according to claim 3,
**characterized in that**
the pump (17) and the cleaning access (15) are fluidly connected to each other by a first fluid line (18), wherein the first fluid line (18) extends outside the disposal container (16) and the grease separator (11).

5. Grease separator system according to claim 4,
**characterized in that**
the first fluid line (18) and the cleaning access (15) are detachably connected to each other.

6. Grease separator system according to claim 5,
**characterized in that**
the first fluid line (18) and the cleaning access (15) are detachably connected to each other by clamping levers (19).

7. Grease separator system according to one of the preceding claims, **characterized in that**
a second fluid line (20) for extracting the fluid by suction is fluidly connected to the cleaning access (15), wherein the second fluid line (20) has an open end and extends at least in sections in the separation area (14) within the grease separator (11).

8. Grease separator system according to claim 7,
**characterized in that**
the open end of the second fluid line (20) extends at least in sections into a sludge guard (21).

9. Grease separator system according to claim 7 or 8,
**characterized in that**
the open end of the second fluid line (20) is arranged between the bottom and the outlet (13) of the grease separator (11) during operation.

10. Grease separator system according to one of claims 7 to 9,
**characterized in that**
the grease separator (11) comprises an inlet element (22) and an outlet element (23) which are arranged in the separation area (14), wherein the inlet element (22) is fluidly connected to the inlet (12) and the outlet element (23) is fluidly connected to the outlet (13), and the inlet element (22) has an outlet (24) for the fluid and the outlet element (23) has an inlet (25) for the fluid, and the open end of the second fluid line (20) is arranged between the inlet (25) of the outlet element (23) and the outlet (13) of the grease separator (11).

11. Grease separator system according to one of the preceding claims,
**characterized in that**
the disposal container (16) comprises an access opening (26) through which the separated fluid can be introduced into the disposal container (16), wherein the access opening (26) is arranged in the direction of gravity below the cleaning access (15) of the grease separator, in particular near the bottom of the disposal container (16).

12. Grease separator system according to one of the preceding claims, **characterized in that**
the pump (17) is designed as a piston pump, a rotary pump, or a diaphragm pump.

13. Grease separator system according to one of the preceding claims, **characterized in that**
the pump (17) is designed as a siphon pump.

14. Disposal container for a mobile grease separator system according to one of the preceding claims, comprising a manually operable pump (17), wherein the disposal container (16) can be connected to the separation area (14) of the grease separator (11) in a detachable or fixed fluid-conducting manner for at least partial emptying, and the contents of the separation area (14) can be transferred into the disposal container (16) by means of the pump (17).

15. Method for removing a layer of grease at a grease separator of a grease separator system according to one of claims 1 to 13, wherein
a. the grease content in the separation area (14) is checked,
b. the disposal container (16) is connected to the cleaning access (15),
c. the separated material is then sucked out by activating the pump (17) and transferred to the disposal container (16),
d. the disposal container (16) is separated again from the grease separator and the separated material is disposed of.

## Revendications

1. Système de séparateur de graisse mobile comprenant un séparateur de graisse (11) avec une arrivée (12) destinée à amener un fluide, une sortie (13) pour l'évacuation d'un fluide et une zone de séparation (14), dans lequel le séparateur de graisse (11) comprend un accès de nettoyage (15) à travers lequel au moins un bidon de récupération (16) est relié de façon amovible en communication de fluide avec la zone de séparation (14) du séparateur de graisse (11), **caractérisé en ce que** le bidon de récupération (16) comprend une pompe (17) à actionnement manuel et la pompe (17) permet de faire passer le contenu de la zone de séparation (14) dans le bidon de récupération (16).

2. Système de séparateur de graisse selon la revendication 1, **caractérisé en ce que** la pompe (17) et le bidon de récupération (16) sont formés de façon intégrale.

3. Système de séparateur de graisse selon la revendication 1 ou 2, **caractérisé en ce que** la pompe (17) est disposée sur un côté extérieur du bidon de récupération (16).

4. Système de séparateur de graisse selon la revendication 3, **caractérisé en ce que** la pompe (17) et l'accès de nettoyage (15) sont reliés en communication de fluide l'un avec l'autre par une première conduite de fluide (18), laquelle première conduite de fluide (18) s'étend à l'extérieur du bidon de récupération (16) et du séparateur de graisse (11).

5. Système de séparateur de graisse selon la revendication 4, **caractérisé en ce que** la première conduite de fluide (18) et l'accès de nettoyage (15) sont reliés l'une à l'autre d'une façon pouvant être défaite.

6. Système de séparateur de graisse selon la revendication 5, **caractérisé en ce que** la première conduite de fluide (18) et l'accès de nettoyage (15) sont reliés l'une à l'autre par des leviers de serrage (19) d'une façon pouvant être défaite.

7. Système de séparateur de graisse selon l'une des revendications précédentes, **caractérisé en ce qu'**une deuxième conduite de fluide (20) est reliée en communication de fluide avec l'accès de nettoyage (15) pour l'aspiration du fluide, la deuxième conduite de fluide (20) comportant une extrémité ouverte et s'étendant au moins en partie dans la zone de séparation (14) à l'intérieur du séparateur de graisse (11).

8. Système de séparateur de graisse selon la revendication 7, **caractérisé en ce que** l'extrémité ouverte de la deuxième conduite de fluide (20) s'étend au moins en partie dans un garde-boue (21).

9. Système de séparateur de graisse selon la revendication 7 ou 8, **caractérisé en ce que** l'extrémité ouverte de la deuxième conduite de fluide (20) est disposée, en fonctionnement, entre le fond et la sortie (13) du séparateur de graisse (11).

10. Système de séparateur de graisse selon l'une des revendications 7 à 9, **caractérisé en ce que** le séparateur de graisse (11) comprend un élément d'arrivée (22) et un élément de sortie (23) qui sont disposés dans la zone de séparation (14), l'élément d'arrivée (22) étant relié en communication de fluide avec l'arrivée (12) et l'élément de sortie (23) avec la sortie (13), et l'élément d'arrivée (22) comportant une évacuation (24) pour le fluide et l'élément de sortie (23) une entrée (25) pour le fluide et l'extrémité ouverte de la deuxième conduite de fluide (20) étant disposée entre l'entrée (25) de l'élément de sortie (23) et la sortie (13) du séparateur de graisse (11).

11. Système de séparateur de graisse selon l'une des revendications précédentes, **caractérisé en ce que** le bidon de récupération (16) comprend une ouverture d'accès (26) à travers laquelle le fluide séparé peut être amené dans le bidon de récupération (16), l'ouverture d'accès (26) étant disposée sous l'accès de nettoyage (15) du séparateur de graisse dans le sens d'action de la gravité, en particulier près du fond du bidon de récupération (16).

12. Système de séparateur de graisse selon l'une des revendications précédentes, **caractérisé en ce que** la pompe (17) est conformée comme une pompe à piston, une pompe centrifuge ou une pompe à membrane.

13. Système de séparateur de graisse selon l'une des revendications précédentes, **caractérisé en ce que** la pompe (17) est conformée comme une pompe à siphon.

14. Bidon de récupération pour un système de séparateur de graisse mobile selon l'une des revendications précédentes, comprenant une pompe (17) à actionnement manuel, lequel bidon de récupération (16) peut être relié par conduction de fluide avec la zone de séparation (14) du séparateur de graisse (11), d'une façon pouvant être défaite ou fixe, en vue d'une vidange au moins partielle et la pompe (17) permet de transférer le contenu de la zone de séparation (14) dans le bidon de récupération (16).

15. Procédé pour éliminer une couche de graisse dans un séparateur de graisse d'un système de séparateur de graisse selon l'une des revendications 1 à 13, dans lequel
a. la proportion de graisse dans la zone de séparation (14) est vérifiée,
b. le bidon de récupération (16) est raccordé à l'accès de nettoyage (15),
c. la matière séparée est ensuite aspirée par l'actionnement de la pompe (17) et transférée dans le bidon de récupération (16),
d. le bidon de récupération (16) est détaché du séparateur de graisse et la matière séparée est jetée.
